(19) Europäisches Patentamt
European Patent Office
Office européen des brevets

(11) **EP 3 125 486 B1**

(12) **FASCICULE DE BREVET EUROPEEN**

(45) Date de publication et mention
de la délivrance du brevet:
**18.10.2023 Bulletin 2023/42**

(21) Numéro de dépôt: **16180683.1**

(22) Date de dépôt: **22.07.2016**

(51) Classification Internationale des Brevets (IPC):
**H04L 27/26** $^{(2006.01)}$

(52) Classification Coopérative des Brevets (CPC):
**H04L 27/2623; H04L 27/3411**

(54) **REDUCTION DU FACTEUR DE CRETE D'UNE VOIE D'EMISSION D'UN SIGNAL MONO-PORTEUSE**

PAPR REDUZIERUNG EINES EINZELTRÄGER SENDESIGNAL

PAPR REDUCTION OF A SINGLE-CARRIER TRANSMISSION SIGNAL

(84) Etats contractants désignés:
AL AT BE BG CH CY CZ DE DK EE ES FI FR GB GR HR HU IE IS IT LI LT LU LV MC MK MT NL NO PL PT RO RS SE SI SK SM TR

(30) Priorité: **27.07.2015 FR 1501596**

(43) Date de publication de la demande:
**01.02.2017 Bulletin 2017/05**

(73) Titulaire: **Thales**
**92400 Courbevoie (FR)**

(72) Inventeur: **TRAVERSO, Sylvain**
**92230 Gennevilliers (FR)**

(74) Mandataire: **Atout PI Laplace**
**Immeuble "Visium"**
**22, avenue Aristide Briand**
**94117 Arcueil Cedex (FR)**

(56) Documents cités:
EP-A1- 1 990 964     US-A- 6 128 350

- KOLLAR; VARGA; CZIMER: "Clipping Based Iterative PAPR Reduction Techniques for FBMC", 17TH INTERNATIONAL OFDM WORKSHOP 2012; PROCEEDINS OF, 29 août 2012 (2012-08-29), - 30 août 2012 (2012-08-30), pages 1-7, XP002757900, Essen , Germany

- JONES D L: "Peak power reduction in OFDM and DMT via active channel modification", SIGNALS, SYSTEMS, AND COMPUTERS, 1999. CONFERENCE RECORD OF THE THIRTY -THIRD ASILOMAR CONFERENCE ON OCT. 24-27, 1999, PISCATAWAY, NJ, USA,IEEE, US, 24 octobre 1999 (1999-10-24), page 1076, XP032142028, DOI: 10.1109/ACSSC.1999.831875 ISBN: 978-0-7803-5700-6

- ZHEN HE: "A Novel PAPR Reduction Scheme in FBMC-OQAM Systems Based on Extend Candidate Transmit Sequences", JOURNAL OF INFORMATION AND COMPUTATIONAL SCIENCE, vol. 12, no. 3, 10 février 2015 (2015-02-10), pages 915-925, XP055274062, CN ISSN: 1548-7741, DOI: 10.12733/jics20105369

- INTEL CORPORATION ET AL: "PAPR-Reduction Performance in SC-FDMA Transmission", 3GPP DRAFT; R1-051151 PAPR-REDUCTION PERFORMANCE IN SC-FDMA TRANSMISSION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. San Diego, USA; 20051010 - 20051014, 3 October 2005 (2005-10-03), XP050596011, [retrieved on 2005-10-03]

- KIMURA S ET AL: "PAR reduction for OFDM signals based on deep Clipping", COMMUNICATIONS, CONTROL AND SIGNAL PROCESSING, 2008. ISCCSP 2008. 3RD INTERNATIONAL SYMPOSIUM ON, IEEE, PISCATAWAY, NJ, USA, 12 March 2008 (2008-03-12), pages 911-916, XP031269197, ISBN: 978-1-4244-1687-5

## Description

La présente invention se place dans le domaine de la réduction du facteur de crête des émissions réalisées selon une forme d'onde mono-porteuse. L'invention s'applique en particulier aux équipements radio d'émission utilisés pour la transmission de la voie montante du standard 4G LTE (acronyme anglais pour Long Term Evolution).

La dynamique d'un signal peut être caractérisée par son facteur de crête, couramment nommé PAPR (acronyme anglais pour Peak to Average Power Ratio), soit le rapport entre la puissance de crête de ce signal et sa puissance moyenne.

Les signaux de transmission peuvent être divisés en deux grandes familles :

- les signaux dits à enveloppe constante : ces signaux ont une puissance instantanée constante en fonction du temps, leur PAPR vaut donc 1 (ou 0 dB), et

- les signaux dits à enveloppe non-constante : ces signaux ont une variation plus ou moins importante de la puissance instantanée en fonction du temps. Pour ce type de signaux, le PAPR peut atteindre des valeurs de l'ordre de 12 dB.

Afin de maximiser le bilan de liaison d'une communication, il est nécessaire d'amplifier le signal avant de le transmettre. Cette amplification se fait généralement à l'aide d'un amplificateur de puissance analogique. En simplifiant grossièrement le comportement de l'amplificateur de puissance, il est possible de définir trois zones de fonctionnement :

- la zone linéaire : les échantillons à la sortie de l'amplificateur de puissance sont une version amplifiée linéairement des échantillons à l'entrée de l'amplificateur de puissance,

- la zone de compression : les échantillons à la sortie de l'amplificateur de puissance sont comprimés par la non linéarité de l'amplificateur de puissance,

- la zone de saturation : les échantillons à la sortie de l'amplificateur de puissance sont saturés par la non linéarité de l'amplificateur de puissance.

Le point de fonctionnement de l'amplificateur de puissance est appelé OBO (acronyme anglais pour Output BackOff), et correspond à la différence entre la puissance de saturation de l'amplificateur de puissance et la puissance moyenne, à la sortie de l'amplificateur de puissance. Ce point de fonctionnement est lié au PAPR du signal à transmettre. En effet, la puissance de crête de l'amplificateur de puissance étant fixée, la puissance moyenne, et donc le rendement de l'amplificateur, est d'autant plus faible que le PAPR est élevé.

Plus le point de fonctionnement est haut, plus le rendement de l'amplificateur est important. Un rendement faible est synonyme de consommation élevée et d'augmentation de la taille de l'amplificateur de puissance. L'utilisation d'un point de fonctionnement trop élevé entraine l'amplification d'une partie du signal dans la zone non linéaire de l'amplificateur de puissance (zones de compression et de saturation), ce qui dégrade le spectre du signal émis.

Les signaux à transmettre devant généralement respecter des gabarits spectraux très contraignants, la réduction du PAPR du signal à transmettre dans le respect de ces contraintes est donc un point clé de la performance d'un poste radio.

Pour ces raisons, il est de plus en plus courant d'utiliser des solutions de prédistorsion (numériques par exemple) du signal radio, afin de linéariser l'amplificateur de puissance. Ces solutions de prédistorsion sont d'autant plus performantes et stables que le PAPR du signal à transmettre est réduit.

Les formes d'onde basées sur des modulations mono-porteuses, comportent généralement un filtre de mise en forme, le plus souvent un filtre de Nyquist. La constellation utilisée, ainsi que le filtre de mise en forme, permettent d'ajuster à la fois l'encombrement spectral et le facteur crête de la modulation.

Ainsi, l'utilisation d'un filtre de mise en forme présentant un fort excès de bande (en anglais roll-off), permettra d'obtenir un signal ayant un faible facteur de crête, mais un étalement spectral plus élevé.

L'utilisation d'un filtre de mise en forme présentant un faible excès de bande, permettra d'obtenir un signal ayant un fort facteur de crête, mais un étalement spectral moins élevé. Cependant, la longueur du filtre augmente lorsque l'excès de bande diminue, ce qui est une contrainte importante à la mise en oeuvre de modulations mono-porteuses pour lesquelles l'excès de bande du filtre de mise en forme tend vers zéro.

Les modulations mono-porteuses comprennent donc généralement des filtres de mise en forme présentant des excès de bande de l'ordre de 0.2 à 0.3. Le signal résultant présente un facteur crête de l'ordre de 1 à 3dB, ne nécessitant généralement pas la mise en oeuvre d'un procédé de réduction du facteur de crête.

Les contraintes actuelles d'occupation du spectre et de coût de la ressource fréquentielle font que les futurs standards visent à la réduction de l'excès de bande du filtre de mise en forme des modulations mono-porteuses. De manière à tendre vers zéro sans requérir des filtres de longueur infinie, des formes d'ondes comme par exemple la forme d'onde SC-FDMA (acronyme anglais pour Single Carrier - Frequency Division Multiple Access), utilisée dans le cadre de la voie montante du standard LTE, mettent en oeuvre une modulation modulée comme une modulation multi-porteuse, et comportant en outre un pré-codage des données par une matrice DFT (acronyme anglais pour Discret Fourier Transform, ou transformée de Fourier discrète). La densité de puissance du signal résultant est celle d'un signal modulé en mono-porteuse dont le facteur d'excès de bande est nul. Les signaux SC-FDMA sont de la classe des signaux à enveloppe non-constante, et présentent généralement un PAPR d'environ 7 à 8dB, bien supérieur à celui des modulations mono-porteuses classiques. Cette valeur varie principalement selon le type de constellation choisi pour la modulation des données, comme par exemple la constellation QPSK (acronyme anglais pour Quadrature Phase Shift Keying, ou modulation par changement de phase) ou la constellation 16QAM (acronyme anglais pour Quadrature Amplitude Modulation, ou modulation d'amplitude en quadrature).

Le problème posé consiste alors à limiter le facteur de crête du signal avant son amplification, afin de maximiser le rendement de l'amplificateur de puissance, sans dégrader le spectre émis, tout en limitant l'impact sur le taux d'erreur binaire du signal.

Plusieurs techniques adressent cette problématique, parmi lesquelles la plus évidente consiste à sur-dimensionner l'amplificateur de puissance. Ainsi, pour une puissance de sortie donnée, l'amplificateur peut être utilisé à un point de fonctionnement bas, et donc travailler dans la zone de linéarité. Cependant, un tel amplificateur de puissance consomme beaucoup d'énergie et dissipe beaucoup de chaleur, ce qui est un problème notamment lorsque l'équipement radio est un équipement portatif (comme c'est le cas la plupart du temps pour la voie montante du LTE).

Une deuxième technique consiste à écrêter, ou comprimer, le signal à transmettre. Le PAPR du signal émis diminue ainsi en proportion du niveau d'écrêtage choisi. Dans ce cas de figure, le spectre du signal à transmettre peut être fortement dégradé, et donc ne plus entrer dans le gabarit spectral d'émission. De plus, les performances de la liaison, qualifiées par exemple par son taux d'erreur binaire, peuvent être fortement dégradées.

Une troisième technique consiste à écrêter le signal, puis à le filtrer. Dans ce cas de figure, le filtre utilisé est généralement un filtre complexe, car le nombre de coefficients de la réponse impulsionnelle est important. L'écrêtage diminue le PAPR du signal émis, et le filtre permet de s'assurer que le signal entre dans un gabarit spectral prédéterminé. Cependant, le filtrage fait remonter le niveau de PAPR, il s'agit donc de trouver un compromis entre diminution du PAPR et respect du gabarit d'émission. Dans l'ensemble, les performances de la liaison peuvent être fortement dégradées.

Une quatrième technique consiste à augmenter l'excès de bande du filtre de mise en forme pour le signal à transmettre. Dans ce cas de figure, la bande du signal à transmettre augmente, ce qui n'est pas compatible avec le respect d'un gabarit spectral d'émission. Dans le cas du signal SC-FDMA, la norme LTE décrit des gabarits d'émission qui ne permettent pas l'utilisation de cette technique.

Une cinquième technique, comme par exemple la technique connue sous le nom de SLM (acronyme anglais pour Sélective Mapping), est connue pour s'appliquer à des signaux multi-porteuses, mais pourraient être adaptées pour les modulations mono-porteuses. Cette technique consiste à générer plusieurs versions d'un même symbole, et à transmettre la version présentant le PAPR le plus faible. Dans ce cas de figure, il est alors nécessaire de transmettre une information supplémentaire au récepteur pour qu'il puisse décoder convenablement l'information transmise. Ce type de technique implique une diminution du débit de la transmission. De plus, la qualité de la transmission est corrélée au fait que l'information supplémentaire a été correctement reçue, ou qu'elle soit connue par le récepteur.

Enfin, une technique, connue sous le nom d'ACE (acronyme anglais pour Active Constellation Extension) permet de réduire le PAPR des modulations multi-porteuses, sans dégrader les performances de la liaison. Afin de ne pas dégrader les performances de la forme d'onde, elle se limite à la modification des symboles situés à l'extérieur de la constellation utilisée.

Ainsi, les solutions selon l'art antérieur ne permettent pas à la fois de :

- limiter efficacement le PAPR des modulations mono-porteuses,

- ne pas dégrader le spectre du signal à transmettre, et

- limiter le plus possible l'impact sur les performances.

L'invention propose de répondre au problème posé, en introduisant dans l'équipement d'émission une chaîne de retour réalisant l'écrêtage, le filtrage et la démodulation du signal à émettre, puis en comparant les symboles résultants avec les symboles initiaux. Cette comparaison permet de générer des symboles modifiés afin d'obtenir un signal mono-porteuse répondant à la problématique.

L'invention consiste donc en un procédé de réduction du facteur de crête dans un dispositif d'émission d'un signal mono-porteuse, selon la revendication 1.

Selon un mode de réalisation du procédé de réduction du facteur de crête lorsque les deuxièmes, troisièmes, quatrièmes et cinquièmes étapes sont réalisées itérativement, le nombre d'itérations réalisées est fixe.

Selon un mode de réalisation du procédé de réduction du facteur de crête lorsque les deuxièmes, troisièmes, quatrièmes et cinquièmes étapes sont réalisées itérativement, le nombre d'itérations réalisées dépend du PAPR du signal mono-porteuse généré lors de la troisième étape, et d'un nombre d'itérations maximum.

Selon un mode de réalisation du procédé de réduction du facteur de crête, le signal mono-porteuse est un signal SC-FDMA, pour lequel :

- la deuxième étape de génération d'un signal mono-porteuse comprend une transformée de Fourier sur M points, une allocation de symboles sur des sous porteuses, une transformée de Fourier inverse sur N points, et une conversion parallèle - série sur N points, et
- la quatrième étape de génération de symboles écrêtés comprend une conversion série - parallèle sur N points, une transformée de Fourier sur N points, une allocation de sous-porteuses sur des symboles, et une transformée de Fourier inverse (104) sur M points,

où M représente une taille dudit bloc de symboles initiaux, et N est fonction de la largeur de bande disponible pour la transmission.

Selon un autre mode de réalisation du procédé de réduction du facteur de crête, le signal mono-porteuse est un signal FBMC pré-codé, pour lequel :

- la deuxième étape (702) de génération d'un signal mono-porteuse comprend un filtrage par un banc de M filtres, une transformée de Fourier sur M points (103), une allocation de symboles sur des sous porteuses (111), une transformée de Fourier inverse (112) sur N points, un filtrage par un banc de N filtres, et une conversion parallèle - série (113) sur N points, et
- la quatrième étape (704) de génération d'un bloc de symboles écrêtés comprend une conversion série - parallèle (131) sur N points, un filtrage par un banc de N filtres, une transformée de Fourier (132) sur N points, une allocation de sous-porteuses sur des symboles (133), une transformée de Fourier inverse (104) sur M points, et un filtrage par un banc de M filtres,

où M représente une taille dudit bloc de symboles initiaux, et N est fonction de la largeur de bande disponible pour la transmission.

Avantageusement, dans le procédé de réduction du facteur de crête, la quatrième étape de génération de symboles écrêtés comprend un filtrage dudit signal mono-porteuse écrêté.

L'invention concerne également un dispositif de réduction du facteur de crête dans un équipement d'émission d'un signal mono-porteuse, selon la revendication 7.

Dans un mode de réalisation du dispositif de réduction du facteur de crête, le composant logique programmable met en oeuvre :

- une chaîne d'émission configurée pour générer un signal mono-porteuse à partir d'un bloc de symboles initiaux,
- une chaîne de retour configurée pour écrêter ledit signal mono-porteuse, et générer un bloc de symboles écrêtés, et
- un module de modification des symboles configuré pour générer un bloc de symboles modifiés à partir desdits symboles initiaux, desdits symboles écrêtés, et d'une contrainte de modulation.

L'invention concerne également un équipement radio configuré pour émettre un signal mono-porteuse, caractérisé en ce qu'il comprend un dispositif de réduction du facteur de crête tel que décrit précédemment.

L'invention sera mieux comprise et d'autres caractéristiques et avantages apparaîtront mieux à la lecture de la description qui suit, donnée à titre non limitatif, et grâce aux figures annexées parmi lesquelles :

- la figure 1 présente un schéma de principe d'un mode de réalisation d'un dispositif d'émission selon l'invention ;

- la figure 2 présente le principe de modification des symboles à émettre en fonction d'une contrainte de modulation ;

- les figures 3a et 3b sont des exemples illustrant le résultat d'une modification des symboles à émettre lorsque ces derniers sont modulés respectivement en QPSK et en 16QAM;

- la figure 4 décrit le mécanisme d'écrêtage profond ;

- la figure 5 est un exemple de résultat atteint en mettant en oeuvre l'invention, sur le spectre du signal mono-porteuse émis ;

- la figure 6 est un exemple de performance atteinte par la mise en oeuvre de l'invention ;

- la figure 7 est un diagramme représentant les différentes étapes d'un mode de réalisation du procédé selon l'invention ;

- la figure 8 est un exemple d'équipement radio mettant en oeuvre un mode de réalisation selon l'invention.

L'invention s'applique à tous les équipements d'émission d'un signal modulé en mono-porteuse. Cela comprend en particulier les signaux pour lequel les données sont modulées selon une modulation multi-porteuse après avoir été pré-codées afin de rendre la distribution de puissance du signal proche de celle d'un signal mono-porteuse. C'est le cas en particulier des signaux SC-FDMA utilisés par la voie montante de la 4G LTE, mais également d'autres formes d'ondes, comme par exemple la forme d'onde FBMC (acronyme anglais pour Filter Bank Multicarrier) pré-codée.

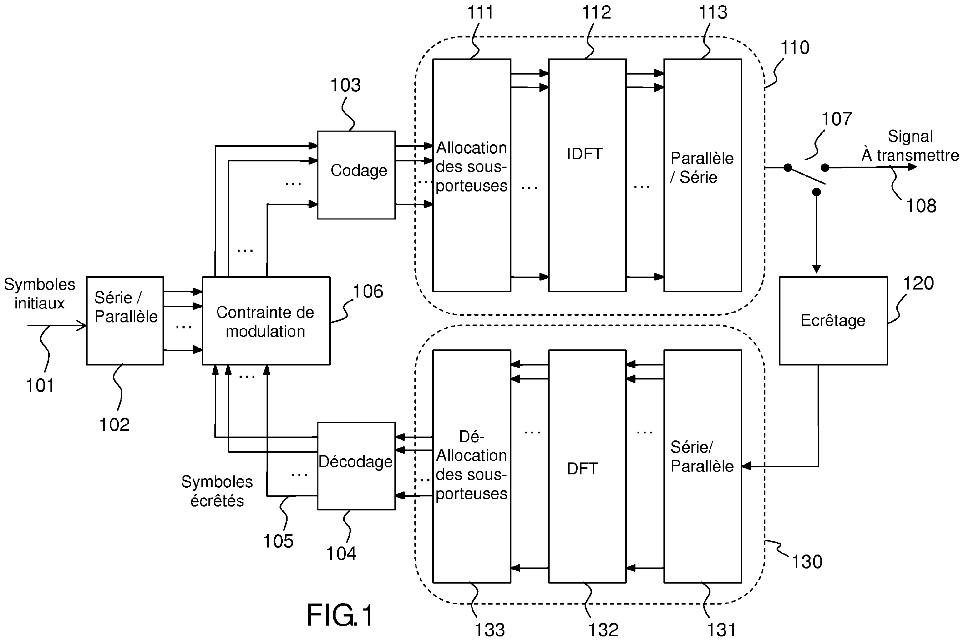

La figure 1 présente un schéma de principe d'un mode de réalisation d'un dispositif selon l'invention lorsqu'il est implémenté dans un équipement radio d'émission d'un signal SC-FDMA.

Dans un équipement standard d'émission SC-FDMA, les symboles à transmettre sont regroupés par blocs de M symboles initiaux 101. Ces symboles sont les symboles à émettre, pour lesquels les différents algorithmes de traitement du signal, comme par exemple l'entrelacement ou le codage canal, ont déjà été appliqués. Ils ont également été mappés selon une constellation PSK ou QAM. Ces symboles sont lus en parallèle par le biais d'un convertisseur série/parallèle 102, puis codés par une matrice de pré-codage 103 réalisant une DFT sur M points.

Les symboles pré-codés sont ensuite modulés 110 en OFDM. Cette transformation comprend en particulier l'allocation 111 des différents symboles pré-codés sur les N sous-porteuses allouées à la transmission du signal, avec $N \geq M$. Les sous-porteuses non allouées au signal sont utilisées pour transmettre de la signalisation, ou sont complétées avec des zéros. Une transformée de Fourier inverse sur N points est appliquée à l'ensemble des sous-porteuses, le résultat de la transformée étant convertie en série par un convertisseur parallèle/série 113.

Toujours dans le cadre d'un équipement SC-FDMA, le signal modulé 108 ainsi construit correspond à un symbole SC-FDMA. Un préfixe cyclique est ajouté à ce symbole SC-FDMA, qui est ensuite transmis à la chaîne radio, en charge de la transposition du signal sur fréquence porteuse, de son amplification et de son émission.

L'invention se place préférablement en amont de l'insertion du préfixe cyclique, mais pourrait également se situer en aval sans que cela ne lui porte préjudice. Elle consiste à transmettre (107) le signal ainsi modulé non pas directement à la chaîne radio en charge de l'émission, mais à lui faire parcourir une chaîne de retour dont le rôle est de l'écrêter, de le filtrer et de le démoduler et de faire l'opération inverse du pré-codage, pour déterminer de nouveaux symboles à émettre, puis à faire parcourir à ces symboles la chaîne d'émission avant de les transmettre à la chaîne radio. Elle comprend donc un dispositif d'écrêtage 120 du signal modulé. Cet écrêtage consiste à saturer l'amplitude du signal au niveau d'un seuil potentiellement paramétrable.

Le signal écrêté est ensuite démodulé 130. Cette démodulation est identique en tout point de celle d'un récepteur standard destiné à recevoir un tel signal SC-FDMA. Elle comprend la conversion série/parallèle 131 des symboles reçus, une transformée de Fourier 132 sur N points, et la dé-allocation 133 des sous porteuses utiles. Les M symboles reçus sur les sous-porteuses utiles adressent ensuite un décodeur 104 réalisant une DFT inverse sur M points. La sortie du décodeur correspond à un bloc de M symboles écrêtés 105. Le fait de ne considérer que M porteuses parmi les N allouées au signal revient à réaliser un filtrage du signal écrêté dans le domaine fréquentiel.

Les symboles écrêtés sont des symboles qui, s'ils étaient modulés puis transmis, généreraient un signal mono-porteuse dont le PAPR est inférieur au signal généré à partir des symboles initiaux. Cependant, les performances d'un tel signal (mesurées par exemple en taux d'erreur binaire) seraient dégradées.

L'invention comprend également un module 106 de modification des symboles. Ce module prend en entrée le bloc de symboles initiaux et le bloc de symboles écrêtés, et les utilise pour calculer un bloc de symboles modifiés en fonction d'une contrainte de modulation. Cette modification, décrite plus en détail par la suite, a pour but de détecter les symboles ayant le plus été affectés par l'opération d'écrêtage, et ayant donc un impact important sur la diminution des performances de la forme d'onde. Le module de modification des symboles va les ramener dans une zone de fonctionnement qui garantira un compromis entre dégradation des performances et diminution du PAPR.

Les symboles modifiés peuvent alors être à leur tour traités par la chaîne d'émission, le signal mono-porteuse résultant étant cette fois transmis (107) à la chaîne radio pour être émis.

Le signal à émettre étant modulé à partir des symboles modifiés, son spectre est en tout point conforme au spectre du signal SC-FDMA réalisé à partir des symboles initiaux. Il ne présente pas de dégradations liées à l'écrêtage.

L'invention s'applique de manière identique quelque soit la constellation sur laquelle sont mappés les symboles d'entrée 101, et à tous les points de la constellation. Elle s'applique en particulier aux constellations utilisées par le SC-FDMA, comme la QPSK ou la 16QAM, dont elle permet de faire varier la position de tous les symboles.

Dans le mode de réalisation présenté en Figure 1, la dé-allocation 133 des sous-porteuses permettant de sélectionner parmi les N sous porteuses M symboles transmis vers le décodeur 104 joue le rôle de filtre fréquentiel, destiné à atténuer les effets de l'écrêtage 120 sur le spectre du signal. Dans un autre mode de réalisation, il est possible de rajouter un filtrage supplémentaire du signal, réalisé dans le domaine fréquentiel ou dans le domaine temporel, à la suite de l'écrêtage.

Enfin, elle est compatible de toutes les variantes de cette même architecture, comme par exemple l'utilisation d'une DFT inverse dans la matrice de pré-codage 103, d'une transformée de Fourier lors de la modulation 112 du signal d'une DFT dans la matrice de décodage 104, d'une transformée de Fourier inverse lors de la démodulation 132 du signal.

Selon un autre mode de réalisation de l'invention, moins avantageux, le module de modification des symboles est positionné en amont de la conversion série/parallèle 102.

L'invention s'applique également de manière totalement identique lorsque le signal à transmettre est autre qu'un signal SC-FDMA, dès lors qu'il s'agit d'un signal mono-porteuse utilisant une modulation multi-porteuse pré-codée de manière à rendre sa distribution de puissance proche de celle d'un signal mono-porteuse. Dans le cas particulier d'une forme d'onde FBMC précodée, seuls les éléments constituant la chaîne d'émission et la chaîne de retour diffèrent. En effet, la chaîne d'émission comprend alors en outre un premier banc de filtres multi-porteuses positionné avant le module 103 de pré-codage, et un deuxième banc de filtres destiné à filtrer le signal en sortie de la transformée de Fourier 112. La chaîne de réception comprend en outre un premier banc de filtres en amont de la transformée de Fourier 132 et un deuxième banc de filtres après la transformée de Fourier du décodeur 104.

L'invention se positionne donc dans un poste radio, à l'interface entre le traitement du signal en charge de générer le signal bande de base, et la chaîne radio d'émission, en charge de la transposition en fréquence, de l'amplification et de la transmission du signal.

Préférablement, elle se situe dans la partie numérique du poste radio, en amont d'un convertisseur numérique/analogique, les différents traitements étant implémentés sur des composants logiques programmables, mais peut également être implémentée dans la partie analogique du poste, ou à michemin entre les deux, réalisant par exemple l'écrêtage à l'aide de diodes.

Elle ne nécessite que peu d'éléments nouveaux par rapports aux éléments constituant une chaîne d'émission/réception traditionnelle. En effet, à l'exception de l'écrêtage du signal, les éléments constituant la chaîne de retour sont les éléments habituels d'un récepteur conçu pour recevoir la voie montante ou descendante du standard 4G LTE.

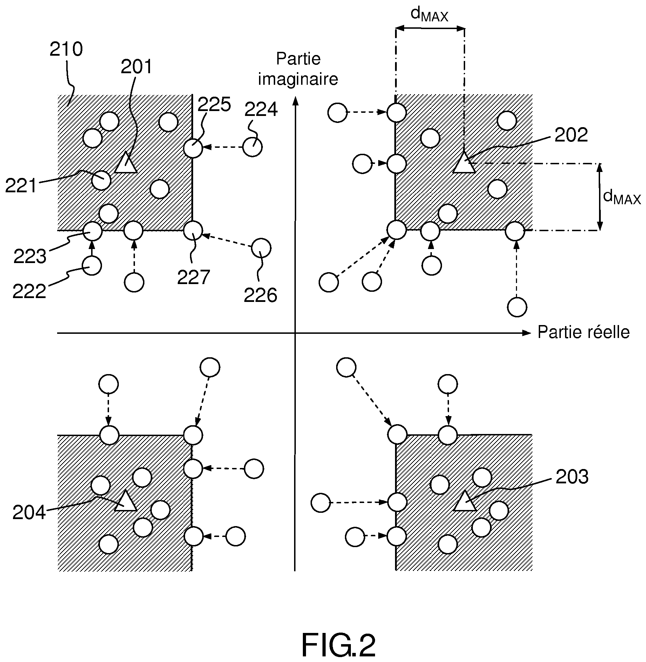

La figure 2 présente le principe de modification des symboles à émettre en fonction d'une contrainte de modulation réalisé par le module 106 de modification des symboles. Ce module prend en entrée un bloc de symboles initiaux, et un bloc de symboles écrêtés. Le module compare les symboles initiaux positionnés conformément à la constellation utilisée, avec les symboles écrêtés filtrés et démodulés, en regard de la contrainte de modulation. La contrainte de modulation consiste par exemple à modifier les symboles écrêtés de manière à limiter leur influence sur les performances de la forme d'onde. Les symboles traités peuvent par exemple être ceux qui diminuent le plus la distance euclidienne entre les symboles, et/ou ceux qui changent de point sur la constellation lors d'une prise de décision.

Dans la figure 2, les triangles 201, 202, 203 et 204 représentent les symboles initiaux dans le cas où ceux-ci sont mappés sur une constellation QPSK.

La zone hachurée 210 représente une zone de contrainte autour de la position du symbole 201, dans laquelle les symboles à émettre doivent se situer afin que les dégradations de performances de la forme d'onde liées à la réduction du PAPR soient limitées. La taille de cette zone est donc le résultat d'un compromis entre diminution du PAPR du signal transmis, et dégradation des performances de la liaison. Dans la figure 2, elle est définie par une distance euclidienne maximum ($d_{max}$) par rapport au symbole initial, selon l'axe réel et l'axe imaginaire. Elle peut également être une distance euclidienne absolue, auquel cas sa forme est celle d'un cercle dont le centre se situe sur le point correspondant au symbole initial, où prendre n'importe quelle autre forme.

Les ronds représentent les symboles écrêtés. De par l'écrêtage, ils s'éloignent de leur position initiale.

Le rond 221 représente un symbole écrêté reçu, correspondant au symbole initialement émis 201. Ce symbole écrêté se situe dans la zone de contrainte, le module de modifications des symboles ne va donc pas modifier ce symbole.

Le rond 222 représente un autre symbole écrêté reçu, correspondant au symbole initialement émis 201. Il est hors de la zone de contrainte, cependant, sa distance euclidienne par rapport au symbole 201 selon l'axe réel est inférieure à la distance maximum autorisée. Seule la partie imaginaire du symbole va donc être modifiée, afin que sa distance euclidienne par rapport au symbole 201 selon l'axe imaginaire soit égale à la distance maximum $d_{max}$. Le symbole modifié résultant est le symbole 223.

Le rond 224 représente un autre symbole écrêté reçu, correspondant au symbole initialement émis 201. Il est hors de la zone de contrainte, cependant, sa distance euclidienne par rapport au symbole 201 selon l'axe imaginaire est inférieure à la distance maximum autorisée. Seule la partie réelle du symbole va donc être modifiée, afin que sa distance euclidienne par rapport au symbole 201 selon l'axe réel soit égale à la distance maximum $d_{max}$. Le symbole modifié résultant est le symbole 225.

Le rond 226 représente un autre symbole écrêté reçu, correspondant au symbole initialement émis 201. Il est hors de la zone de contrainte, sa distance euclidienne par rapport au symbole 201 étant supérieure à la distance maximum autorisée selon l'axe réel et l'axe imaginaire. Le symbole va donc être modifié, afin que ses distances euclidiennes par rapport au symbole 201 selon l'axe réel et selon l'axe imaginaire soient égales à la distance maximum $d_{max}$. Le symbole modifié résultant est le symbole 227.

L'invention permet donc de cibler les symboles les plus impactés par l'opération d'écrêtage, et de les ramener dans une zone garantissant un certain niveau de performance. Le réglage de $d_{max}$, la distance euclidienne maximum autorisée, est donc le résultat d'un compromis entre dégradation des performances, et diminution du PAPR.

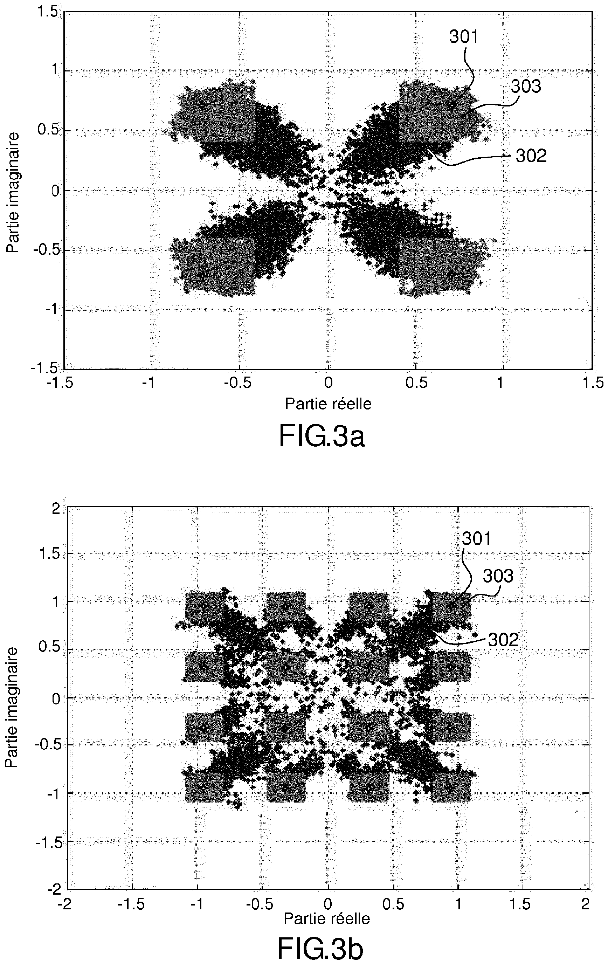

Les figures 3a et 3b sont des exemples illustrant le résultat d'une modification des symboles à émettre lorsque ces derniers sont modulés respectivement en QPSK et en 16QAM.

Dans les figures 3a et 3b, la référence 301 désigne la position des symboles initiaux (pour une valeur de symbole uniquement). Les points noirs, référencés 302, désignent les symboles écrêtés et démodulés, tandis que les points gris, référencés 303, représentent les symboles modifiés. Les symboles modifiés sont tous situés dans une zone de contrainte autour des symboles initiaux, garantissant ainsi une faible dégradation des performances de la forme d'onde.

Selon l'invention, l'écrêtage du signal modulé 120 est fait selon une technique dite « d'écrêtage profond ».

A la différence de l'écrêtage traditionnel, qui limite et fixe la puissance de sortie à la valeur d'un seuil pour toute puissance supérieure à ce seuil, l'écrêtage profond consiste à diminuer la puissance de sortie pour tout signal dépassant un seuil. L'écrêtage profond comprime donc le signal de crête à une valeur plus faible que le PAPR recherché. Son rôle est de réduire l'inévitable remontée des crêtes qui intervient lors de l'étape de filtrage. Ainsi, son utilisation permet de diminuer le nombre d'itérations nécessaires pour atteindre un PAPR cible donné.

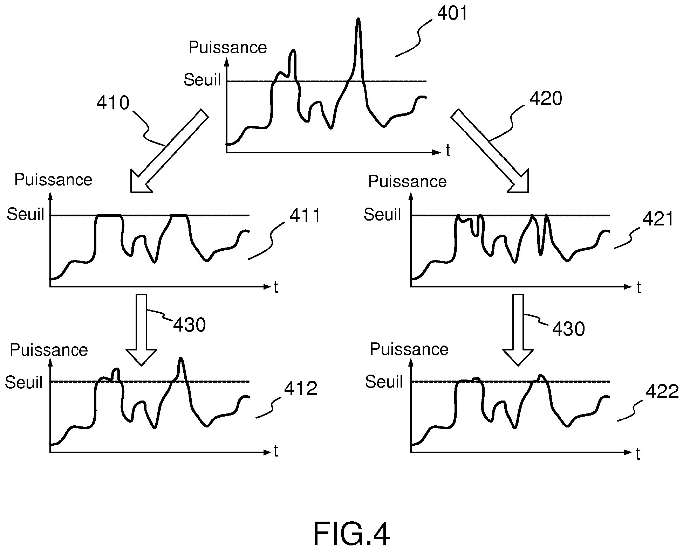

La figure 4 décrit le mécanisme d'écrêtage profond, en le comparant à l'écrêtage traditionnel.

La courbe 401 représente l'évolution dans le temps de la puissance du signal utile à transmettre. Cette puissance est comparée à un seuil, le mécanisme d'écrêtage ayant pour rôle de limiter la puissance du signal à ce seuil.

La courbe 411 représente la puissance du signal, après une étape 410 d'écrêtage traditionnel. Le signal dont la puissance dépasse le seuil a été modifié de manière à ce que la puissance du signal écrêté soit maintenant limitée à la valeur du seuil.

La courbe 412 représente la puissance du signal, après une étape 430 de filtrage du signal écrêté par la méthode de l'écrêtage traditionnel. De par sa nature, le filtrage entraine une remontée des crêtes de la puissance du signal écrêté et filtré à des valeurs supérieures au seuil.

Le mécanisme d'écrêtage profond met en oeuvre la relation suivante :

$$out_{DeepClipping}(n) = p(n).\exp[j.\varphi(n)], \qquad (2)$$

avec :

$$p(n) = \begin{cases} |in_{DeepClipping}(n)| & si \quad |in_{DeepClipping}(n)| \le Seuil \\ Seuil + a_0.\left(|in_{DeepClipping}(n)| - Seuil\right) & si \quad |in_{DeepClipping}(n)| > Seuil \end{cases}, \qquad (3)$$

et

$$\varphi(n) = Arg\left[in_{DeepClipping}(n)\right], \qquad (4)$$

où :

- $in_{DeepCtipping}(n)$ est le signal d'entrée de l'algorithme d'écrêtage profond,
- $out_{DeepClipping}(n)$ est le signal de sortie de l'algorithme d'écrêtage profond,
- $a_0$ est la pente de l'algorithme d'écrêtage profond,
- $Seuil$ est le seuil de l'algorithme d'écrêtage profond,
- $Arg[x]$ est la fonction donnant la phase du signal x.

La courbe 421 représente la puissance du signal, après une étape 420 d'écrêtage profond. Le signal dont la puissance dépasse le seuil a été modifié, de manière à ce que la puissance du signal écrêté soit inférieure à la valeur du seuil d'un niveau inversement proportionnel au niveau de puissance de dépassement du signal initial.

La courbe 422 représente la puissance du signal, après une étape 430 de filtrage du signal écrêté par la méthode de l'écrêtage profond. Les remontées des crêtes de la puissance du signal observées sont bien inférieures aux remontées observées lors de l'utilisation de la méthode d'écrêtage traditionnel.

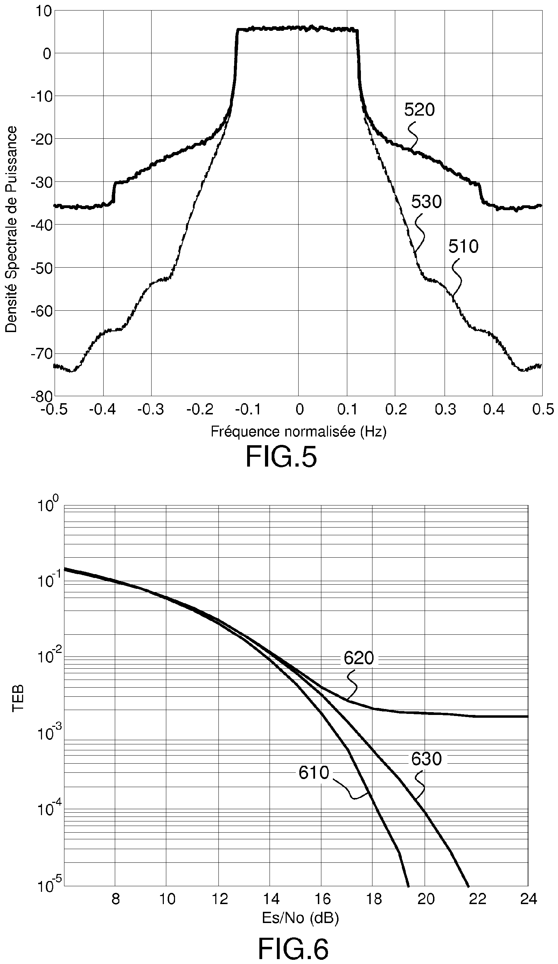

La figure 5 est un exemple de résultat atteint en mettant en oeuvre l'invention, sur le spectre d'un signal SC-FDMA émis. Le spectre 510 correspond au spectre du signal modulé à partir des symboles initiaux. Le spectre 520 représente le spectre du signal 510 après écrêtage. On observe une remontée importante des lobes latéraux du spectre. Le spectre 530 représente le spectre du signal modulé à partir des symboles modifiés calculés par le module de modification des symboles. On observe que les remontées du signal 510 ont disparu, le spectre du signal 530 étant confondu avec le spectre du signal 510, tout en présentant un PAPR inférieur.

La figure 6 est un exemple de performance atteinte par la mise en oeuvre de l'invention, sur un signal SC-FDMA.

Sur la figure 6 sont représentés les courbes de performance, qualifiées en termes de taux d'erreur binaire (TEB) en fonction du rapport signal sur bruit (Es/N0), pour un signal 610 modulé à partir des symboles initiaux, pour un signal 620 écrêté, et pour un signal 630 modulé à partir des symboles modifiés selon l'invention.

L'écrêtage du signal entraine une forte dégradation des performances de la forme d'onde, qui se caractérise par l'apparition d'un plancher de performances pour un taux d'erreur binaire d'environ $2.10^{-3}$.

Le signal 630 généré conformément à l'invention présente des performances légèrement en retrait par rapport aux performances du signal initial, mais ne présente pas de palier de performances, tout en ayant un PAPR meilleur que le PAPR du signal initial.

L'invention permet donc de limiter efficacement le PAPR des signaux SC-FDMA grâce aux traitements effectués, sans modifier le spectre du signal à transmettre, tout en maitrisant l'impact sur la qualité de la liaison. Ces propriétés proviennent de ce que l'invention agit uniquement sur la position des points de la constellation à transmettre, et de ce que la position des points de la constellation à transmettre est contrôlée par le module de modification des symboles. La complexité d'implémentation de la solution proposée est limitée, puisqu'elle utilise en grande partie des blocs déjà existant pour la démodulation des signaux de la voie descendante. De plus, elle ne nécessite pas la transmission d'informations supplémentaires au récepteur pour permettre le décodage des signaux transmis.

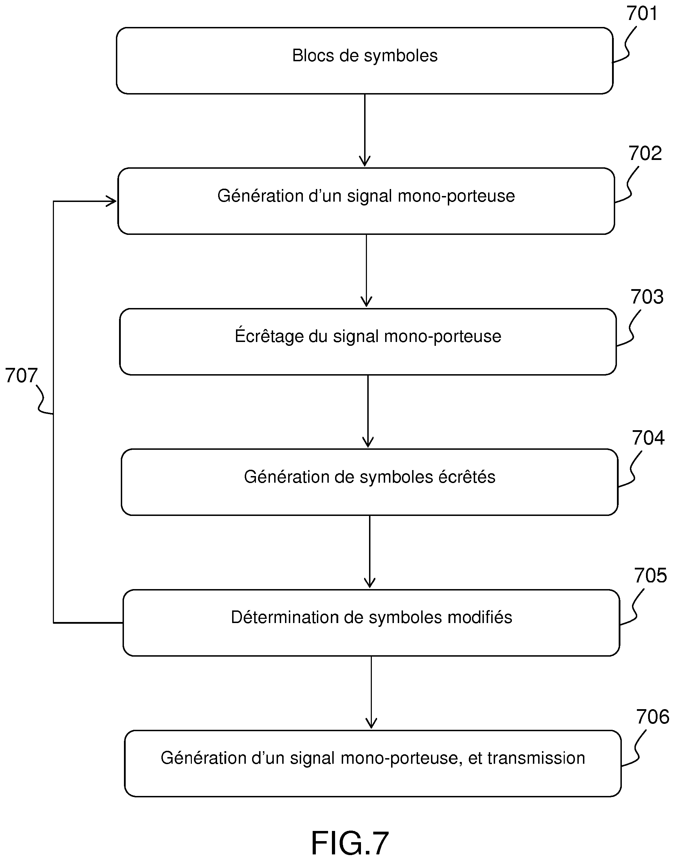

L'invention concerne également un procédé de réduction du PAPR destiné à être mis en oeuvre dans un dispositif d'émission d'un signal mono-porteuse. La figure 7 est un diagramme représentant les différentes étapes d'un mode de réalisation de ce procédé.

Le procédé comprend une première étape 701 de regroupement des symboles à émettre par blocs. Dans le cas d'une modulation SC-FDMA, la taille de ces blocs est liée à la taille de la matrice de pré-codage 103.

Il comprend également une deuxième étape 702 de génération d'un signal mono-porteuse à partir du bloc de symboles de la première étape. Dans l'exemple du SC-FDMA, cette émission comprend le pré-codage des symboles par une matrice DFT, ainsi que l'allocation des symboles sur les N sous-porteuses, une transformée de Fourier inverse, et une conversion parallèle/série de la sortie de la transformée de Fourier inverse.

Le procédé comprend une troisième étape 703 d'écrêtage du signal mono-porteuse généré lors de la deuxième étape. Cet écrêtage peut être réalisé de manière classique, en fixant une valeur de seuil maximum sur la puissance du signal, ou en utilisant une technique avantageuse d'écrêtage profond.

Le procédé comprend une quatrième étape 704 de génération de symboles écrêtés à partir du signal mono-porteuse écrêté généré lors de la quatrième étape. Cette étape est l'étape inverse de la deuxième étape du procédé.

Le procédé comprend enfin une cinquième étape 705 de génération de symboles modifiés, utilisant le bloc de symboles déterminé lors de la première étape du procédé, et les blocs de symboles écrêtés générés lors de la quatrième étape. Cette étape est réalisée tel que décrit pour la figure 2.

Les symboles modifiés générés sont alors modulés au cours d'une sixième étape 706, semblable à la deuxième étape, puis transmis à la chaîne radio.

Dans un autre mode de réalisation, à l'issue de la cinquième étape 705 de détermination de symboles modifiés, les étapes deux à cinq sont réitérées (707). En effet, les remontées des crêtes intervenant lors de l'étape de filtrage/démodulation sont inévitables. L'utilisation d'un procédé itératif répétant les étapes d'écrêtage, de filtrage/démodulation, et de contrainte de modulation, permet de converger vers le PAPR cible.

Pour ceci, les symboles modifiés sont utilisés par la deuxième étape de génération d'un signal mono-porteuse en lieu et place des symboles initiaux, les symboles écrêtés générés à l'issue de la quatrième étape étant toujours comparés aux symboles initiaux.

Le nombre d'itérations du procédé selon l'invention peut être fixe, ou bien dépendre d'une mesure du facteur de crête du signal généré lors de la deuxième étape, le nombre d'itérations étant majoré afin d'éviter les boucles infinies.

Enfin, l'invention se rapporte à un équipement radio implémentant le dispositif selon l'invention.

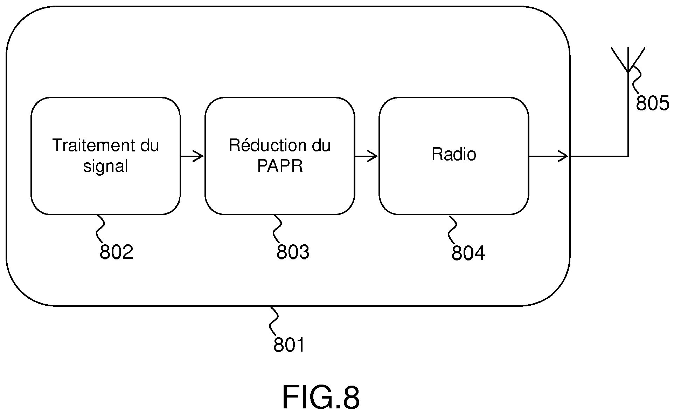

La figure 8 est un exemple d'équipement radio mettant en oeuvre un mode de réalisation de l'invention. Dans la figure 8, un équipement radio 801 est configuré pour émettre des données selon un signal mono-porteuse. Cet équipement comprend un dispositif 802 en charge de la réalisation des algorithmes de traitement du signal, comme par exemple l'organisation des données, le codage canal, l'entrelacement, et la génération de symboles selon une constellation choisie, etc. Il comprend également une chaîne radio 804 en charge notamment de la conversion numérique/analogique du signal, de sa transposition sur fréquence porteuse, de son amplification, et de son émission, en utilisant l'antenne 805. L'équipement radio comprend en outre un dispositif 803 selon un mode de réalisation de l'invention, dont le rôle est de mettre en forme le signal en le modulant, tout en limitant le facteur de crête du signal ainsi généré.

Le dispositif 803 mettant en oeuvre le procédé peut, sans limitation, être exécuté par composant logique programmable, tel qu'un processeur, un DSP (acronyme anglais pour Digital Signal Processor) ou un micro contrôleur par exemple, exécutant un programme comprenant une séquence d'instructions ou scripts, ou par une machine de calcul dédiée (par exemple un ensemble de portes logiques comme un FPGA ou un ASIC), ou tout autre module matériel.

**Revendications**

1. Procédé de réduction du facteur de crête dans un dispositif d'émission d'un signal mono-porteuse, le procédé comprenant:

   • une première étape (701) de regroupement de symboles à émettre par blocs, les symboles à émettre étant modulés par une modulation 16QAM, et pour chacun des blocs de symboles à émettre :

      ◦ une deuxième étape (702) de génération (103, 110) d'un signal mono-porteuse à partir dudit bloc de symboles à émettre,
      ◦ une troisième étape (703) d'écrêtage (120) dudit signal mono-porteuse issu de la deuxième étape selon une technique dite d'écrêtage profond (420),
      ◦ une quatrième étape (704) de génération (130, 104) d'un bloc de symboles écrêtés à partir dudit signal mono-porteuse écrêté calculé lors de la troisième étape,
      ◦ une cinquième étape (705) de génération (106) d'un bloc de symboles modifiés à partir dudit bloc de symboles écrêtés, en définissant une zone de contrainte autour de chacun des symboles du bloc de symboles à émettre de sorte que la distance Euclidienne, selon l'axe réel et l'axe imaginaire respectivement ou en valeur absolue, entre les symboles de la zone de contrainte et le symbole à émettre correspondant soit inférieure ou égale à une distance Euclidienne maximum non nulle, les symboles modifiés correspondant aux symboles écrêtés lorsqu'ils sont situés dans la zone de contrainte du symbole à émettre correspondant, et au déplacement du symbole écrêté vers la position la plus proche de la zone de contrainte du symbole à émettre correspondant sinon,
      ◦ une sixième étape (706) de génération et de transmission d'un signal mono-porteuse à partir dudit bloc de symboles modifiés calculés lors de la cinquième étape,
      les deuxièmes, troisièmes, quatrièmes et cinquièmes étapes sont réalisées itérativement, ledit bloc de symboles utilisé lors de la deuxième étape (702) de l'itération n étant ledit bloc de symboles modifiés calculé lors de la cinquième étape (705) de l'itération n-1 à partir de la deuxième itération.

2. Procédé de réduction du facteur de crête selon la revendication 1, dans lequel le nombre d'itérations réalisées est fixe.

3. Procédé de réduction du facteur de crête selon la revendication 1, dans lequel le nombre d'itérations réalisées dépend du PAPR du signal mono-porteuse généré lors de la troisième étape, et d'un nombre d'itérations maximum.

4. Procédé de réduction du facteur de crête selon l'une quelconque des revendications précédentes, dans lequel ledit signal mono-porteuse est un signal SC-FDMA, et pour lequel :

   • la deuxième étape (702) de génération d'un signal mono-porteuse comprend une transformée de Fourier sur M points (103), une allocation de symboles sur des sous porteuses (111), une transformée de Fourier inverse (112) sur N points, et une conversion parallèle - série (113) sur N points, et
   • la quatrième étape (704) de génération d'un bloc de symboles écrêtés comprend une conversion série - parallèle (131) sur N points, une transformée de Fourier (132) sur N points, une allocation de sous-porteuses sur des symboles (133) et une transformée de Fourier inverse (104) sur M points,

   où M représente une taille dudit bloc de symboles initiaux, et N est fonction de la largeur de bande disponible pour la transmission.

5. Procédé de réduction du facteur de crête selon l'une quelconque des revendications 1 à 3, dans lequel ledit signal mono-porteuse est un signal FBMC pré-codé, et pour lequel :

   • la deuxième étape (702) de génération d'un signal mono-porteuse comprend un filtrage par un banc de M filtres, une transformée de Fourier sur M points (103), une allocation de symboles sur des sous porteuses (111), une transformée de Fourier inverse (112) sur N points, un filtrage par un banc de N filtres, et une conversion parallèle - série (113) sur N points, et

• la quatrième étape (704) de génération d'un bloc de symboles écrêtés comprend une conversion série - parallèle (131) sur N points, un filtrage par un banc de N filtres, une transformée de Fourier (132) sur N points, une allocation de sous-porteuses sur des symboles (133), une transformée de Fourier inverse (104) sur M points, et un filtrage par un banc de M filtres,

où M représente une taille dudit bloc de symboles initiaux, et N est fonction de la largeur de bande disponible pour la transmission.

6. Procédé de réduction du facteur de crête selon l'une quelconque des revendications précédentes, dans lequel ladite quatrième étape (704) de génération d'un bloc de symboles écrêtés comprend un filtrage dudit signal mono-porteuse écrêté.

7. Dispositif de réduction du facteur de crête dans un équipement d'émission d'un signal mono-porteuse, le dispositif mettant en oeuvre un composant logique programmable configuré pour exécuter un procédé selon l'une des revendications 1 à 6.

8. Dispositif de réduction du facteur de crête selon la revendication 7, dans lequel ledit composant logique programmable met en oeuvre :

• une chaîne d'émission (103, 110) configurée pour générer un signal mono-porteuse à partir d'un bloc de symboles initiaux (101),
• une chaîne de retour (120, 130, 104) configurée pour écrêter (120) ledit signal mono-porteuse, et générer un bloc de symboles écrêtés (105), et
• un module (106) de modification des symboles configuré pour générer un bloc de symboles modifiés à partir desdits symboles initiaux, desdits symboles écrêtés, et d'une contrainte de modulation.

9. Equipement radio (801) configuré pour émettre un signal mono-porteuse, **caractérisé en ce qu'**il comprend un dispositif de réduction du facteur de crête (803) selon l'une quelconque des revendications 7 à 8.

**Patentansprüche**

1. Verfahren zur Reduzierung des Scheitelfaktors in einer Vorrichtung zum Senden eines Einträgersignals, wobei das Verfahren Folgendes umfasst:

• einen ersten Schritt (701) des Gruppierens von zu sendenden Symbolen in Blöcken, wobei die zu sendenden Symbole durch eine 16QAM-Modulation moduliert werden, und für jeden der Blöcke von zu sendenden Symbolen:

◦ einen zweiten Schritt (702) des Erzeugens (103, 110) eines Einträgersignals anhand des Blocks von zu sendenden Symbolen,
◦ einen dritten Schritt (703) des Clippings (120) des aus dem zweiten Schritt hervorgegangenen Einträgersignals gemäß einer Technik, die als tiefes Clipping (420) bezeichnet wird,
◦ einen vierten Schritt (704) der Erzeugung (130, 104) eines Blocks von geclippten Symbolen anhand des geclippten Einträgersignals, das im dritten Schritt berechnet wurde,
◦ einen fünften Schritt (705) des Erzeugens (106) eines Blocks von modifizierten Symbolen anhand des Blocks von geclippten Symbolen, indem eine Zwangszone um jedes der Symbole des Blocks von zu sendenden Symbolen definiert wird, so dass der euklidische Abstand, jeweils entlang der Realachse und der Imaginärachse oder als Absolutwert, zwischen den Symbolen der Zwangszone und dem entsprechenden zu sendenden Symbol kleiner als ein oder gleich einem maximalen euklidischen Abstand ungleich Null ist, wobei die modifizierten Symbole den geclippten Symbolen entsprechen, wenn sie sich in der Zwangszone des entsprechenden zu sendenden Symbols befinden, und, wenn nicht, der Verschiebung des geclippten Symbols in die Position, die der Zwangszone des entsprechenden zu sendenden Symbols am nächsten liegt, entsprechen,
◦ einen sechsten Schritt (706) des Erzeugens und Sendens eines Einträgersignals anhand des Blocks von im fünften Schritt berechneten modifizierten Symbolen,

wobei der zweite, dritte, vierte und fünfte Schritt iterativ durchgeführt werden, wobei der im zweiten Schritt (702) der Iteration n verwendete Block von Symbolen der im fünften Schritt (705) der Iteration n-1 anhand der zweiten Iteration berechnete Block von modifizierten Symbolen ist.

2. Verfahren zur Reduzierung des Scheitelfaktors nach Anspruch 1, wobei die Anzahl der durchgeführten Iterationen fest ist.

3. Verfahren zur Reduzierung des Scheitelfaktors nach Anspruch 1, wobei die Anzahl der durchgeführten Iterationen von dem PAPR des im dritten Schritt erzeugten Einträgersignals und von einer maximalen Anzahl von Iterationen abhängt.

4. Verfahren zur Reduzierung des Scheitelfaktors nach einem der vorhergehenden Ansprüche, wobei das Einträgersignal ein SC-FDMA-Signal ist, und für welches:

   • der zweite Schritt (702) des Erzeugens eines Einträgersignals eine M-Punkt-Fourier-Transformation (103), eine Symbolzuweisung auf Subträger (111), eine N-Punkt-Inverse-Fourier-Transformation (112) und eine N-Punkt-Parallel-Seriell-Wandlung (113) umfasst, und
   • der vierte Schritt (704) des Erzeugens eines Blocks von geclippten Symbolen eine Seriell-Parallel-Wandlung (131) über N Punkte, eine Fourier-Transformation (132) über N Punkte, eine Subträger-Zuweisung auf Symbole (133) und eine inverse Fourier-Transformation (104) über M Punkte umfasst,

   worin M eine Größe des Blocks von Anfangssymbolen darstellt, und N eine Funktion der für die Übertragung verfügbaren Bandbreite ist.

5. Verfahren zur Reduzierung des Scheitelfaktors nach einem der Ansprüche 1 bis 3, wobei das Einträgersignal ein vorcodiertes FBMC-Signal ist, und für welches:

   • der zweite Schritt (702) des Erzeugens eines Einzelträgersignals eine Filterung durch eine Bank von M Filtern, eine M-Punkt-Fourier-Transformation (103), eine Zuweisung von Symbolen auf Subträger (111), eine inverse N-Punkt-Fourier-Transformation (112), eine Filterung durch eine Bank von N Filtern und eine Parallel-Serien-Wandlung (113) auf N Punkten umfasst, und
   • der vierte Schritt (704) des Erzeugens eines Blocks von geclippten Symbolen eine Serien-Parallel-Umwandlung (131) über N Punkte, eine Filterung durch eine Bank von N Filtern, eine Fouriertransformation (132) über N Punkte, eine Zuweisung von Unterträgern zu Symbolen (133), eine inverse Fouriertransformation (104) über M Punkte und eine Filterung durch eine Bank von M Filtern umfasst,

   worin M eine Größe des Blocks von Anfangssymbolen darstellt und N eine Funktion der für die Übertragung verfügbaren Bandbreite ist.

6. Verfahren zur Reduzierung des Scheitelfaktors nach einem der vorhergehenden Ansprüche, wobei der vierte Schritt (704) des Erzeugens eines Blocks von geclippten Symbolen ein Filtern des geclippten Einträgersignals umfasst.

7. Vorrichtung zur Reduzierung des Scheitelfaktors in einer Ausrüstung zur Übertragung eines Einträgersignals, wobei die Vorrichtung eine programmierbare Logikkomponente implementiert, die so konfiguriert ist, dass sie ein Verfahren nach einem der Ansprüche 1 bis 6 ausführt.

8. Vorrichtung zur Reduzierung des Scheitelfaktors nach Anspruch 7, wobei die programmierbare Logikkomponente Folgendes implementiert:

   • eine Sendekette (103, 110), die so konfiguriert ist, dass sie ein Einträgersignal anhand eines Blocks von Anfangssymbolen (101) erzeugt,
   • eine Rückführungskette (120, 130, 104), die zum Clippen (120) des Einträgersignals und des Erzeugens eines Blocks von geclippten Symbolen (105) konfiguriert ist, und
   • ein Symbolmodifikationsmodul (106), das zum Erzeugen eines Blocks von modifizierten Symbolen anhand der Anfangssymbole, der geclippten Symbole und einer Modulationsbeschränkung konfiguriert ist.

9. Funkausrüstung (801), die zum Senden eines Einträgersignals konfiguriert ist, **dadurch gekennzeichnet, dass** sie eine Vorrichtung zur Reduzierung des Scheitelfaktors (803) nach einem der Ansprüche 7 bis 8 umfasst.

**Claims**

1. A method for reducing the peak factor in a single-carrier signal transmission device, wherein the method comprises:

   • a first step (701) of grouping symbols to be transmitted in blocks, the symbols to be transmitted being modulated by a 16QAM modulation, and, for each of the blocks of symbols to be transmitted:

   ◦ a second step (702) of generating (103, 110) a single-carrier signal from said block of symbols to be transmitted,
   ◦ a third step (703) of clipping (120) said single-carrier signal derived from the second step according to a technique called deep clipping (420),
   ◦ a fourth step (704) of generating (130, 104) a block of clipped symbols from said clipped single-carrier signal computed in the third step,
   ◦ a fifth step (705) of generating (106) a block of modified symbols from said block of clipped symbols of the first step, by defining a constraint zone around each symbol of the block of symbols to be transmitted such that the Euclidian distance, along the real axis and the imaginary axis respectively, or in terms of absolute value, between the symbols of the constraint zone and the corresponding symbol to be transmitted is lower than or equal to a non-zero maximum Euclidian distance, the modified symbols corresponding to the clipped symbols when they are located in the constraint zone of the corresponding symbol to be transmitted, and, when they are not, corresponding to the movement of the clipped symbol up to the closest position of the constraint zone of the corresponding symbol to be transmitted,
   ◦ a sixth step (706) of generating and transmitting a single-carrier signal from said block of modified symbols computed in the fifth step,

   the second, third, fourth and fifth steps being performed iteratively, said block of symbols used in the second step (702) of the iteration n being said block of modified symbols computed in the fifth step (705) of the iteration n-1 from the second iteration.

2. The method for reducing peak factor according to claim 1, wherein the number of iterations performed is fixed.

3. The method for reducing peak factor according to claim 1, wherein the number of iterations performed depends on the PAPR of the single-carrier signal generated in the third step, and on a maximum number of iterations.

4. The method for reducing peak factor according to any one of the preceding claims, wherein said single-carrier signal is an SC-FDMA signal, and for which:

   • the second step (702) of generating a single-carrier signal comprises an M-point Fourier transform (103), an allocation of symbols to sub-carriers (111), an N-point inverse Fourier transform (112), and an N-point parallel-serial conversion (113), and
   • the fourth step (704) of generating a block of clipped symbols comprises an N-point serial-parallel conversion (131), an N-point Fourier transform (132), an allocation of sub-carriers to symbols (133), and an M-point inverse Fourier transform (104),

   where M represents a size of said block of initial symbols, and N is a function of the bandwidth available for the transmission.

5. The method for reducing peak factor according to any one of claims 1 to 3, wherein said single-carrier signal is a pre-coded FBMC signal, and for which:

   • the second step (702) of generating a single-carrier signal comprises a filtering by a bank of M filters, an M-point Fourier transform (103), an allocation of symbols to sub-carriers (111), an N-point inverse Fourier transform (112), a filtering by a bank of N filters, and an N-point parallel-serial conversion (113), and
   • the fourth step (704) of generating a block of clipped symbols comprises an N-point serial-parallel conversion (131), a filtering by a bank of N filters, an N-point Fourier transform (132), an allocation of sub-carriers to symbols (133), an M-point inverse Fourier transform (104), and a filtering by a bank of M filters,

where M represents a size of said block of initial symbols, and N is a function of the bandwidth available for the transmission.

6. The method for reducing the peak factor according to any one of the preceding claims, wherein said fourth step (704) of generating a block of clipped symbols comprises a filtering of said clipped single-carrier signal.

7. A device for reducing the peak factor in a single-carrier signal transmission equipment item, wherein the device implements a programmable logic component configured to execute a method according to one of claims 1 to 6.

8. The device for reducing the peak factor according to claim 7, wherein said programmable logic component implements:

    • a transmission chain (103, 110) configured to generate a single-carrier signal from a block of initial symbols (101),
    • a return chain (120, 130, 104) configured to clip (120) said single-carrier signal and generate a block of clipped symbols (105), and
    • a module (106) for modifying symbols configured to generate a block of modified symbols from said initial symbols, said clipped symbols and a modulation constraint.

9. A radio equipment item (801) configured to transmit a single-carrier signal, **characterised in that** it comprises a device for reducing peak factor (803) according to any one of claims 7 to 8.

FIG.1

EP 3 125 486 B1

FIG.2

FIG.3a

FIG.3b

FIG.4

FIG.5

FIG.6

FIG.7

```
┌─────────────────────────────────────────────────────────────────┐
│                                                                   │
│                                                                   │
│   ┌──────────────┐     ┌──────────────┐     ┌──────────────┐      │
│   │              │     │              │     │              │      │
│   │ Traitement du│ ──▶ │ Réduction du │ ──▶ │    Radio     │ ──▶  │
│   │   signal     │     │    PAPR      │     │              │      │
│   │              │     │              │     │              │      │
│   └──────────────┘     └──────────────┘     └──────────────┘      │
│          802                  803                  804             │
│                                                                   │
└─────────────────────────────────────────────────────────────────┘
                              801
```

805

## FIG.8